# FASCICULE DE BREVET EUROPEEN

(11) **EP 2 129 459 B1**
(45) Date de publication et mention de la délivrance du brevet: **06.06.2018**
(21) Numéro de dépôt: 08787819.5
(22) Date de dépôt: 19.03.2008
(51) Int. Cl.: B01J 19/32, B01D 3/26, B01D 53/18, B01J 19/02

(54) **STRUCTURE DE GARNISSAGE POUR COLONNE DE MISE EN CONTACT DE FLUIDES ET MÉTHODE DE FABRICATION**
PACKUNGSSTRUKTUR FÜR EINE FLÜSSIGKEITSKONTAKTSÄULE UND VERFAHREN ZU IHRER HERSTELLUNG
PACKING STRUCTURE FOR A FLUID CONTACTING COLUMN AND PRODUCTION METHOD THEREOF

(30) Priorité: 20.03.2007 FR 0702070
(43) Date de publication de la demande: 09.12.2009
(73) Titulaire: IFP Energies nouvelles, 92500 Rueil-Malmaison (FR); Safran Ceramics, 33185 Le Haillan (FR)
(72) Inventeur: ALIX, Pascal, F-38150 Roussillon (FR); BESSETTES, Rémi, F-33370 Tresses (FR); DUMONT, Charles, F-33380 Lacanau de Mios (FR); MAUMUS, Jean-Pierre, F-33160 Saint Medard en Jalles (FR); RAYNAL, Ludovic, F-69600 Oullins (FR)
(86) Numéro de dépôt international: PCT/FR2008/000366
(87) Numéro de publication internationale: WO 2008/135655

(56) Documents cités:
- CN-A- 1 076 384
- CN-A- 1 095 966
- FR-A- 1 193 405
- FR-A- 2 892 644
- US-A- 5 225 116

## Description

La présente invention concerne le domaine des équipements de mise en contact de fluides.

Les colonnes de mise en contact ont pour but de mettre en contact des fluides afin de réaliser des transferts de matière ou de chaleur entre les fluides. Ce type d'équipement de mise en contact de fluide est largement utilisé pour réaliser des opérations de distillation, de rectification, d'absorption, d'échange de chaleur, d'extraction, de réaction chimique, etc.

Les colonnes de mise en contact sont généralement constituées d'une enceinte munie d'éléments de mise en contact interne favorisant l'échange entre les fluides. En général, la colonne permet de mettre en contact intime une phase gazeuse ascendante avec une phase liquide descendante, ou inversement. Dans la colonne, les fluides peuvent circuler à co-courant ou à contre-courant. Les éléments de mise en contact qui augmentent la surface de contact entre les fluides, peuvent être des plateaux, un garnissage structuré, c'est-à-dire la juxtaposition de plusieurs éléments unitaires identiques ou non, agencés de manière ordonnée, par exemple des feuillets ondulés, ou un garnissage en vrac, c'est-à-dire des empilements anarchiques d'éléments unitaires, par exemple des anneaux, des spirales.

Le document EP 0 499 040 décrit des éléments de garnissage internes permettant de mieux gérer les échanges entre les fluides, de repousser les limites de blocage de circulation des fluides tout en présentant des résistances accrues aux agressions chimiques ou à la corrosion.

Dans les applications des colonnes de mises en contact de fluide, notamment la distillation ou l'absorption réactive nécessitant le lavage d'un fluide par une solution absorbante, par exemple la désacidification d'un gaz naturel ou la décarbonatation des fumées de combustion, il est primordial de disposer des meilleurs éléments de mise en contact qui présentent une surface de contact maximum tout en limitant la perte de charge dans la colonne.

Ainsi, la présente invention propose une structure de garnissage interne d'une colonne de mise en contact de fluide bien adaptée aux applications de distillation et d'absorption réactive, qui permet notamment d'augmenter la surface d'échange entre les fluides en limitant l'augmentation de la perte de charge.

De manière générale, l'invention décrit une structure de garnissage d'une colonne de mise en contact de fluides, ladite structure formant un volume comportant un agencement ordonné de faisceaux de tubes de diamètre compris entre 5 et 50 mm, les parois desdits tubes comportant des orifices disposés de manière à favoriser la circulation et le mélange des fluides dans ladite structure, lesdits orifices étant inscrits dans des rectangles dont les côtés mesurent entre 2 et 45 mm et chacun desdits orifices s'étendant sur une aire supérieure à 2 mm², chaque faisceau comprenant quatre tubes respectivement orientés suivant quatre directions. Selon l'invention, le rapport entre l'aire des orifices et l'aire de la partie pleine d'un tube peut être compris entre 10% et 90%.

L'espace entre deux orifices peut ne pas excéder deux fois le diamètre du tube.

Les tubes peuvent comporter un tissage d'au moins deux, de préférence quatre, rubans enroulés suivant deux, de préférence quatre, hélices croisées s'étendant selon un même axe et un même diamètre, de préférence deux desdites hélices croisant les deux autres hélices, lesdits rubans étant distants les uns des autres de manière à former lesdits orifices. Les rubans peuvent comporter au moins l'un des matériaux suivants : du carbone qui est figé par dépôt de carbone, du métal, de la céramique, un matériau thermoplastique, et un matériau thermodurcissable. Chaque faisceau de tubes comprend quatre tubes respectivement orientés suivant quatre directions. Lesdits quatre tubes peuvent être respectivement orientés suivant les quatre directions d'un cube.

La structure de garnissage selon l'invention peut être utilisée dans un procédé de distillation.

La structure de garnissage selon l'invention peut également être mise en oeuvre dans un procédé d'absorption réactive tel que la capture de dioxyde de carbone en post-combustion et le traitement du gaz naturel.

L'invention décrit également une méthode de fabrication d'une structure de garnissage d'une colonne de mise en contact de fluides, dans laquelle on effectue les étapes suivantes :
a) on fabrique des tubes de diamètre compris entre 5 et 50 mm, les parois desdits tubes comportant des orifices disposés de manière à favoriser la circulation et le mélange des fluides dans ladite structure, lesdits orifices étant inscrits dans des rectangles dont les côtés mesurent entre 2 et 45 mm et chacun desdits orifices s'étendant sur une aire supérieure à 2 mm²,
b) on construit un assemblage ordonné desdits tubes en juxtaposant des faisceaux de les faisceaux de tubes s'étendant selon quatre directions,
c) on effectue une liaison des tubes au niveau de leur portion de contact,
d) on usine l'assemblage ordonné de manière à former la structure de garnissage adaptée aux dimensions internes d'une colonne de mise en contact.

A l'étape a), on peut enrouler autour d'un cylindre des rubans, par exemple des mèches, des fils ou des feuillards, de matériau composite selon au moins deux hélices croisées en laissant des espaces entre les rubans de manière à former lesdits orifices entre les rubans. Les rubans peuvent comporter au moins l'un des matériaux suivants : des fibres de carbone qui sont figées par dépôt de carbone, du métal, un matériau thermoplastique, un matériau thermodurcissable.

D'autres caractéristiques et avantages de l'invention seront mieux compris et apparaîtront clairement à la lecture de la description faite ci-après en se référant aux dessins parmi lesquels :
- la figure 1 représente un élément tubulaire de garnissage, selon l'invention,
- les figures la, 1b et 1c représentent différents exemples de forme d'orifices pratiqués dans les éléments tubulaires de garnissage,
- la figure 2 représente un mode de réalisation particulier d'un élément de garnissage selon l'invention,
- les figures 3 et 4 schématisent des garnissages structurés à base d'éléments tubulaires orientés dans deux directions,
- les figures 5 à 8 schématisent des garnissages structurés à base d'éléments tubulaires orientés dans quatre directions, selon l'invention,
- la figure 9 schématise une colonne de mise en contact.

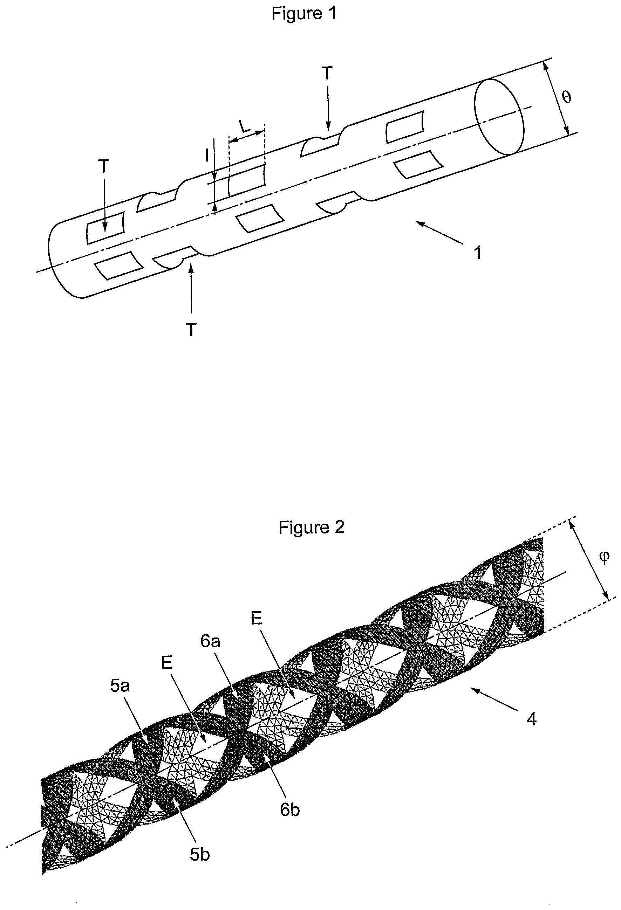

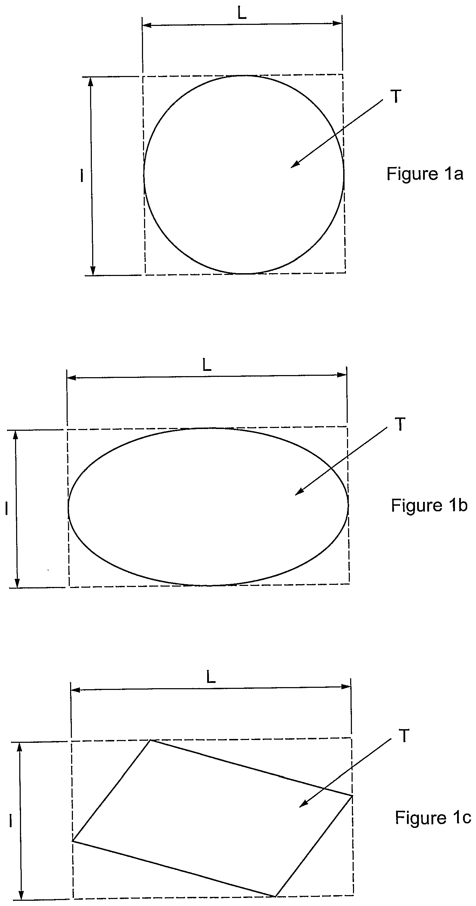

La figure 1 représente un élément tubulaire 1 composant le motif de base d'un garnissage structuré selon l'invention. L'élément 1 est constitué d'une paroi en forme de tube de diamètre θ pourvue d'orifices ou trous T. Selon l'invention, on choisit les dimensions des orifices T et du diamètre θ de manière à optimiser les circulations et la mise en contact des fluides. Le diamètre θ de l'élément tubulaire 1 est compris entre 5 et 50 mm de manière à optimiser l'aire géométrique par unité de volume d'un garnissage structuré composé de tels tubes. Ces dimensions permettent de développer suffisamment d'aire géométrique par unité de volume, tout en maintenant une faible perte de charge.

On choisit l'aire minimum des orifices T supérieure à 2 mm², de préférence 4 mm² de manière à ce que le film liquide qui s'écoule à l'intérieur des tubes puisse être cassé par un flux de gaz qui traverse les orifices. En effet, si la taille des orifices T est inférieure à 2 mm², le film liquide qui circule sur la paroi interne d'un tube risque de boucher par capillarité ces orifices. Les orifices présentant une surface supérieure à 2 mm² permet le passage des phases gazeuses et liquides d'un tube à l'autre, et d'assurer ainsi un bon contact et un bon mélange. Dans l'application du garnissage selon l'invention à l'absorption réactive, on préfère utiliser des tubes munis d'orifices dont l'aire est supérieure à 4 mm², voir 8 mm². En effet, en général, les fluides mis en contact dans une colonne d'absorption réactive circulent à grande vitesse, typiquement à des vitesses comprises entre 1m/s et 2 m/s. De ce fait, on prévoit des orifices plus grand afin de fragmenter le film liquide en circulation à la paroi des tubes.

Les orifices T sont inscrits dans des rectangles de longueur L et de largeur 1 comprises entre 2 et 45 mm, de préférence entre 3 et 20 mm. Autrement dit, un orifice doit toucher les quatre côtés d'un rectangle de longueur L et de largeur 1. Par contre, la forme d'un orifice T peut être quelconque, tant qu'il reste inscrit dans un rectangle de dimensions L et 1. Les figures 1a, 1b et 1c proposent différents exemples, non limitatifs, de forme d'orifices T inscrits dans des rectangles de longueur L et de largeur 1. Sur la figure 1a, l'orifice a une forme sensiblement circulaire. Sur la figure 1b, l'orifice présente une forme d'ellipse. Sur la figure 1c, l'orifice approche une forme de losange. Le fait d'inscrire les orifices dans des rectangles de dimensions L et 1 permet d'imposer une dimension minimum entre les bords des orifices afin de provoquer la cassure du film liquide circulant sur la paroi des tubes du garnissage.

Les orifices T sont disposés de manière ordonnée ou aléatoire. De préférence, les orifices T sont disposés de manière régulière de manière à obtenir des caractéristiques d'échanges homogènes le long de l'élément 1. De préférence, l'espace entre deux orifices n'excède pas 2 fois la valeur du diamètre θ. On peut choisir le nombre d'orifices de manière à ce que l'élément 1 comporte entre 10% et 90% d'ouverture, c'est-à-dire que le rapport entre l'aire des orifices et l'aire de la partie pleine du tube soit compris entre 10% et 90%, une excellente valeur de ce rapport étant comprise entre 25% et 50%.

Les orifices T tels que définis ci-dessus, ouvrent des voies de communication au fluide entre l'intérieur et l'extérieur de l'élément 1 afin d'optimiser le mélange entre les phases, donc le contact et la redistribution entre les phases, circulant dans un garnissage structuré composé d'éléments 1.

Les parois de l'élément 1 peuvent être réalisées avec tout type de matériau, par exemple en carbone/carbone, c'est-à-dire une structure en fibres de carbone figée par dépôt de carbone, en céramique, en métal, en matière polymère, en matériau thermoplastique ou en matériau thermodurcissable. Les orifices T peuvent être obtenus par retrait de matière, par exemple par usinage ou perçage. L'élément 1 peut être obtenu par moulage, par exemple d'un matériau polymère, par formage, ou tout autre procédé.

La figure 2 représente un mode particulier de réalisation de l'élément 1 de la figure 1, par tressage de rubans. L'élément tubulaire 4 de la figure 2 est réalisé par tissage de rubans, par exemple des mèches, des fils, des feuillards, épousant une forme tubulaire. Plus précisément, un ruban 5a est enroulé, en formant une hélice, autour d'un tube de diamètre ϕ. Un deuxième ruban 5b est également enroulé, en formant une hélice, autour du même tube, en étant croisé par rapport au ruban 5a. On choisit l'épaisseur des rubans et le pas des hélices de manière à ce qu'il subsiste des espaces E entre les rubans. De préférence, le pas de l'hélice 5a est identique au pas de l'hélice 5b. Les espaces E jouent le même rôle que les orifices T de la figure 1. Les définitions géométriques des espaces E et du diamètre ϕ sont respectivement identiques aux orifices T et au diamètre ϕ décrits en référence à la figure 1.

Sur la figure 2, en outre, l'élément de garnissage comporte deux rubans supplémentaires 6a et 6b, enroulés selon des hélices respectivement identiques à celles des rubans 5a et 5b et décalées axialement. Ainsi, les espaces E sont sensiblement en forme de losange dont les côtés sont matérialisés par les rubans 5a, 5b, 6a et 6b.

Sans sortir du cadre de l'invention, on peut réaliser des éléments tubulaires 4 en faisant varier différents paramètres, par exemple le nombre de rubans, l'épaisseur et la largeur des rubans, le pas de l'hélice d'enroulement, voire effectuer des enroulements de rubans selon des hélices à pas variable.

Une fois l'enroulement de rubans effectué, on fige la structure de rubans tissés, par exemple par une technique décrite dans le document EP 0 499 040, par traitement thermique, par imprégnation de résine, par collage ou par toute autre technique. On peut utiliser une résine cokéfiable et infiltrable, telle qu'une résine phénolique et on réticule la résine par traitement thermique.

Par exemple, les rubans sont des mèches en fibres de verre ou de carbone, éventuellement enduites d'un matériau thermodurcissable.

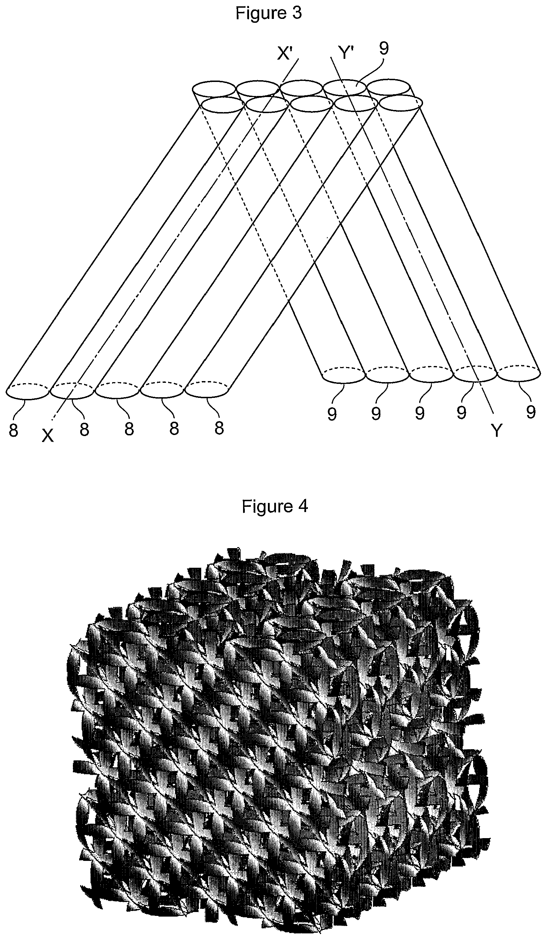

La figure 3 représente un assemblage d'éléments tubulaires pour réaliser un garnissage interne d'une colonne de mise en contact de fluide. Sur la figure 3, les éléments tubulaires sont disposés alternativement selon deux directions matérialisées par les axes XX' et YY'. On dispose une première couche de tubes 8 orientés dans la même direction que l'axe XX'. Les axes des tubes 8 de la première couche sont situés sensiblement dans un même plan de manière à former une couche plane. Un tube 8 est en contact avec les tubes 8 adjacents selon des lignes droites. Puis, on dispose une deuxième couche de tubes 9 orientés selon la direction de l'axe YY', cette deuxième couche étant empilée sur la première couche de tubes 8. Puis on empile une troisième couche de tube sur la deuxième couche, les tubes de cette troisième couche étant orientés dans la direction de l'axe XX'. Et ainsi de suite, on empile des couches de tubes en alternant l'orientation des tubes jusqu'à obtenir un bloc compact aux dimensions souhaitées tel que représenté par la figure 4.

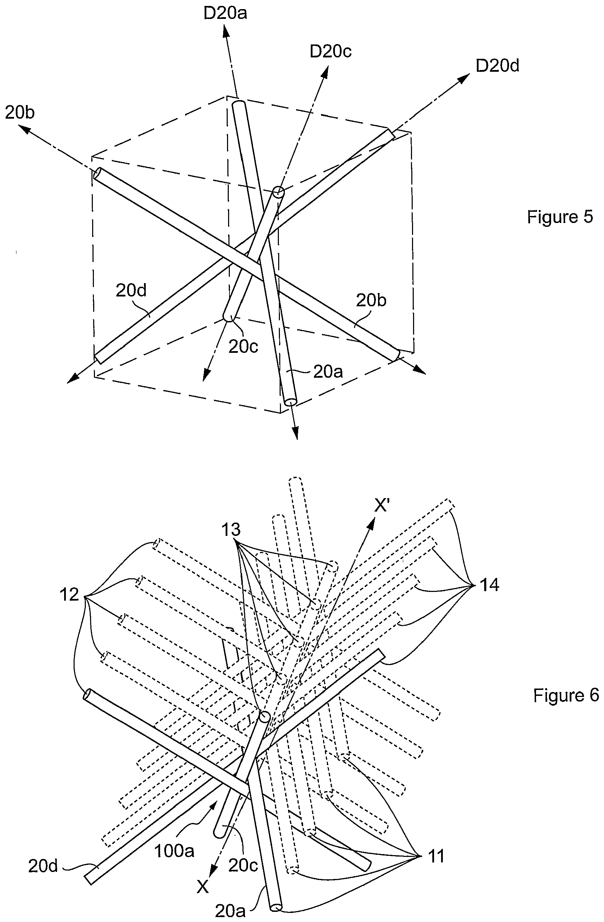

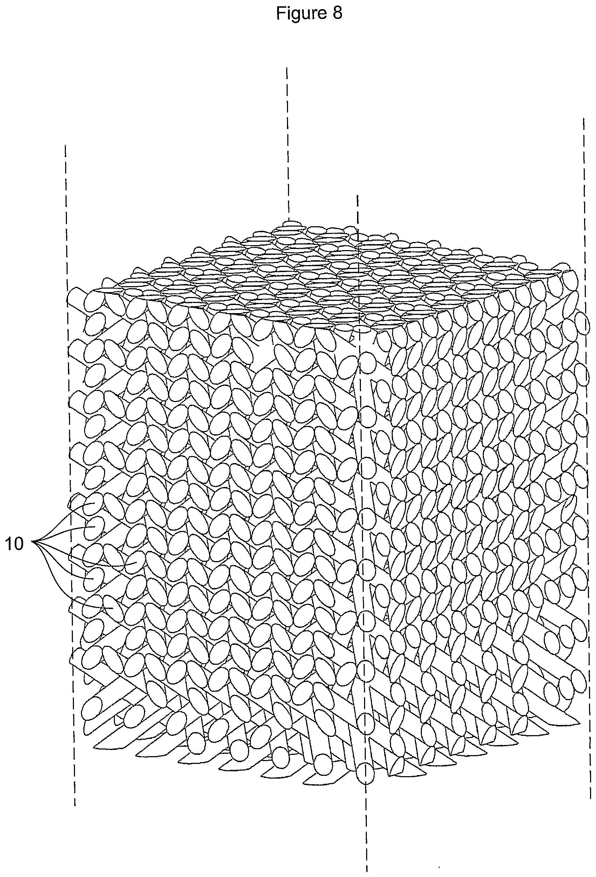

La figure 8 représente un autre assemblage d'éléments tubulaires selon l'invention, les tubes étant disposés suivant quatre directions distinctes. L'agencement détaillé de cet assemblage est décrit en référence aux figures 5, 6 et 7. La figure 5 illustre un faisceau de quatre tubes 20a à 20d, chacun disposé suivant l'une des quatre directions d'assemblage D20a à D20d. Les quatre directions D20a à D20d dans lesquelles les tubes sont assemblés correspondent ici respectivement aux quatre diagonales d'un cube (ou quatre hauteurs/arrêtes d'un tétraèdre régulier), à ceci près que les tubes ne s'entrecoupent pas au niveau de l'intersection des diagonales au centre du cube, mais se croisent au voisinage de ce point.

La construction de l'assemblage ordonné peut débuter par exemple en répétant la disposition de la figure 5, c'est à dire en disposant suivant un axe de construction XX', correspondant au point d'entrecroisement des quatre tubes d'un faisceau, un nouveau faisceau de tubes 20a à 20d disposé dans le même ordre que le faisceau précédent, et ainsi de suite. On obtient ainsi, comme représenté sur la figure 6, un début d'assemblage ordonné formé d'une première rangée 100a de faisceaux de tubes 20a à 20d alignés suivant l'axe. On forme ainsi un entrecroisement de quatre réseaux de tubes 11 à 14 qui s'étendent chacun dans un plan orienté suivant une des quatre directions d'assemblage des tubes dans un faisceau. Les tubes de chaque réseau sont espacés les uns des autres par une distance permettant le passage (entrecroisement) des tubes des autres réseaux.

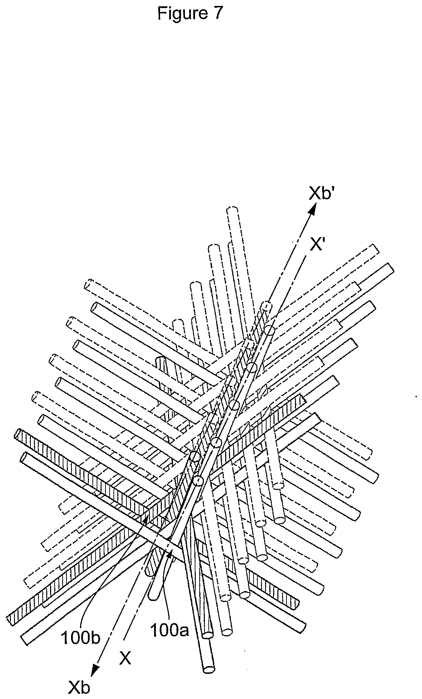

Lorsqu'on a atteint le nombre désiré de faisceaux dans la rangée 100a, on superpose ensuite plusieurs séries de rangées de faisceaux suivant des axes parallèles à l'axe XX' de manière à remplir le volume libre autour de la rangée 100a. La figure 7 illustre la disposition d'une rangée supplémentaire 110b de faisceaux selon un nouvel axe parallèle à l'axe de construction XX'. On complète ensuite de la même façon le volume libre de part et d'autre de la rangée 110a, typiquement jusqu'à l'extrémité des tubes de la rangée 100a, de manière à obtenir dans ce volume une structure tridimensionnelle formée de tubes respectivement disposés suivant quatre directions.

Dans les assemblages de tubes décrits en référence aux figures 4 et 8, les tubes sont liés entre eux au niveau des portions de contact entre tubes. La liaison peut être réalisée par un procédé chimique ou mécanique, par exemple, à l'aide d'un matériau thermodurcissable, par soudage, par dépôt de carbone.

Les blocs de garnissage structurés décrits en référence aux figures 4 et 8 peuvent être usinés aux dimensions et à la forme de la colonne de mise en contact. En général, les colonnes de mise en contact comporte une enceinte cylindrique. Dans ce cas, on usine l'assemblage ordonné de tube pour obtenir une structure de garnissage qui présente une forme cylindrique qui peut être introduite dans l'enceinte cylindrique de la colonne de manière à occuper un maximum d'espace dans la colonne et offrir ainsi une surface d'échange optimale. Pour les colonnes de grand diamètre, on effectue une juxtaposition de plusieurs blocs. Les blocs situés à la périphérie interne de la parois sont usinés pour être adaptés à la forme cylindrique de la colonne. L'usinage des blocs formés par l'assemblage des éléments tubulaires est très délicat compte tenu de la forte porosité intrinsèque à la construction. Selon la nature des matériaux, on emploie des techniques particulières d'usinage pour éviter le flambage des éléments ou l'effondrement de la structure.

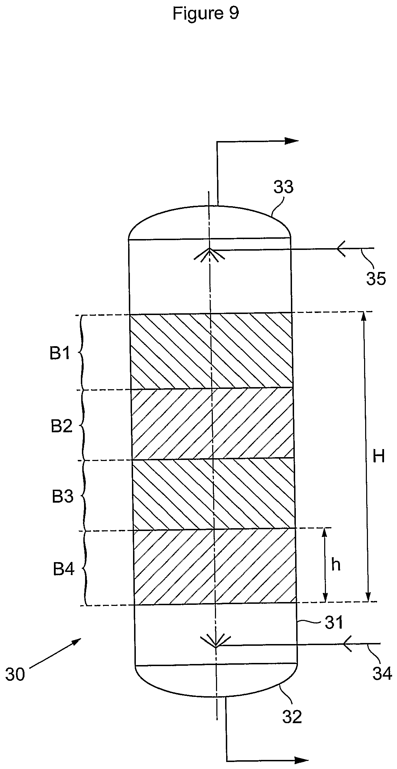

La figure 9 représente une colonne de mise en contact 30 constituée d'une enceinte cylindrique 31 fermée par les pièces de fond 32 et 33. Un fluide, par exemple du gaz, est introduit en fond de la colonne par le conduit 34. Un autre fluide, par exemple du liquide, est introduit en tête de la colonne par le conduit 35. Ces deux fluides entrent en contact dans l'espace situé entre les alimentations de la colonne par les conduits 34 et 35. Pour améliorer la mise en contact et favoriser le transfert de matière et de chaleur, la colonne 30 est pourvue de garnissage sur la hauteur H pouvant atteindre plusieurs dizaines de mètres. Selon l'invention, le garnissage est composé de tubes décrits en référence aux figures 1 ou 2 et disposés par exemple selon les arrangements décrits en référence aux figures 4 ou 8. De préférence, selon l'invention, on utilise un garnissage composé de plusieurs blocs B1, B2, B3 et B4 dans lesquels les tubes sont orientés différemment d'un bloc à l'autre. Par exemple, le garnissage est composé d'une alternance de blocs composés de tubes orientés selon des directions formant des angles supérieurs à 45° par rapport à l'horizontal et des blocs composés de tubes orientés selon des directions formant des angles inférieurs à 45° par rapport à l'horizontal. Par exemple, les tubes d'un bloc sont disposés selon des directions perpendiculaires par rapport aux blocs adjacents. De plus, on peut limiter la hauteur h d'un bloc à une valeur limite, par exemple comprise entre 50 et 500 mm, et de préférence entre 100 et 400 mm pour l'introduction des blocs dans l'enceinte cylindrique lors de l'assemblage de la colonne. Cette alternance d'orientation des tubes des différents blocs associée à une hauteur limitée de chacun des blocs évite de concentrer le liquide sur la paroi interne de l'enceinte 31, ce qui provoquerait une chute de l'aire de contact.

Le garnissage interne de colonne de mise en contact selon la présente invention permet d'obtenir d'excellents résultats dans les opérations de distillation, notamment pour la fabrication des dérivés fluorés nécessitant des distillations en présence de HF (acide fluorhydrique) ou la distillation de certains acides organiques, tel l'acide formique ou l'acide acétique. Il est également particulièrement bien adapté aux applications d'absorption réactive, notamment la capture de dioxyde de carbone en post-combustion et le traitement du gaz naturel, par mise en contact avec une solution liquide absorbante.

L'exemple numérique présenté ci-après permet de comparer un garnissage composé de tubes continus, c'est-à-dire sans orifices, disposés selon l'arrangement de la figure 4 et le même garnissage composé de tubes avec les ouvertures de l'invention. Les résultats ont été obtenus en effectuant des calculs numériques au moyen du logiciel de simulation numérique des écoulements Fluent.

On a déterminé la perte de charge d'un gaz circulant à travers le garnissage pour différentes vitesses superficielles de gaz Vsg (1m/s et 2m/s). Ces vitesses superficielles sont calculées en rapportant le débit de gaz à la section totale de la colonne de mise en contact.

Les simulations ont été réalisées pour déterminer les pertes de charge suivantes :
1) Pertes de charge DPref pour un garnissage composé de tube continu sans ouvertures (diamètre 10 mm).
2) Pertes de charge DP pour un garnissage de géométrie identique au cas 1), excepté que les tubes comportent des ouvertures (diamètre 10 mm ; orifices en forme de losange de 12 mm de long sur 9 mm de large ; surface d'un orifice environ 60 mm² ; espacement entre deux orifices 3 mm, taux d'ouverture 46%).

Les résultats sont présentés dans le tableau ci-dessous donnent le rapport DP/DPref.

| Taux d'ouverture | Vsg (m/s) | DP/DPref |
|---|---|---|
| Garnissage avec tube ouvert 46 % | 1 | 0,598 |
| | 2 | 0,728 |

On constate qu'en ouvrant les tubes (taux d'ouverture de 46%), on diminue de 30 à 40% la perte de charge.

## Revendications

1. Structure de garnissage d'une colonne de mise en contact de fluides, ladite structure formant un volume comportant un agencement ordonné de faisceaux de tubes de diamètre compris entre 5 et 50 mm, les parois desdits tubes comportant des orifices disposés de manière à favoriser la circulation et le mélange des fluides dans ladite structure, lesdits orifices étant inscrits dans des rectangles dont les côtés mesurent entre 2 et 45 mm et chacun desdits orifices s'étendant sur une aire supérieure à 2 mm², chaque faisceau comprenant quatre tubes respectivement orientés suivant quatre directions.

2. Structure de garnissage selon la revendication 1, dans laquelle le rapport entre l'aire des orifices et l'aire de la partie pleine d'un tube est compris entre 10% et 90%.

3. Structure de garnissage selon l'une des revendications 1 et 2, dans laquelle l'espace entre deux orifices n'excède pas deux fois le diamètre du tube.

4. Structure de garnissage selon l'une des revendications précédentes, dans laquelle lesdits tubes comporte un tissage d'au moins deux rubans enroulés suivant deux hélices croisées s'étendant selon un même axe et un même diamètre, lesdits rubans étant distants les uns des autres de manière à former lesdits orifices.

5. Structure de garnissage selon l'une des revendications 1 à 4, dans laquelle les rubans comportent au moins l'un des matériaux suivants : du carbone qui est figé par dépôt de carbone, du métal, de la céramique, un matériau thermoplastique, et un matériau thermodurcissable.

6. Structure de garnissage selon l'une des revendications précédentes, dans laquelle lesdits quatre tubes sont respectivement orientés suivant les quatre directions d'un cube.

7. Utilisation de la structure de garnissage selon l'une des revendications 1 à 6, dans un procédé de distillation.

8. Utilisation de la structure de garnissage selon l'une des revendications 1 à 6, dans un procédé d'absorption réactive tel que la capture de dioxyde de carbone en post-combustion et le traitement du gaz naturel.

9. Méthode de fabrication d'une structure de garnissage d'une colonne de mise en contact de fluides, dans laquelle on effectue les étapes suivantes :
a) on fabrique des tubes de diamètre compris entre 5 et 50 mm, les parois desdits tubes comportant des orifices disposés de manière à favoriser la circulation et le mélange des fluides dans ladite structure, lesdits orifices étant inscrits dans des rectangles dont les côtés mesurent entre 2 et 45 mm et chacun desdits orifices s'étendant sur une aire supérieure à 2 mm²,
b) on construit un assemblage ordonné desdits tubes en juxtaposant des faisceaux de tubes, les faisceaux de tubes s'étendant selon quatre directions,
c) on effectue une liaison des tubes au niveau de leur portion de contact,
d) on usine l'assemblage ordonné de manière à former la structure de garnissage adaptée aux dimensions internes d'une colonne de mise en contact.

10. Méthode de fabrication selon la revendication 9, dans laquelle à l'étape a), on enroule autour d'un cylindre des rubans, par exemple des mèches, des fils ou des feuillards, de matériau composite selon au moins deux hélices croisées en laissant des espaces entre les rubans de manière à former lesdits orifices entre les rubans.

11. Méthode de fabrication selon la revendication 10, dans laquelle les rubans comportent au moins l'un des matériaux suivants : des fibres de carbone qui sont figées par dépôt de carbone, du métal, un matériau thermoplastique, un matériau thermodurcissable.

## Patentansprüche

1. Packungsstruktur für eine Kolonne zur Kontaktierung von Fluiden, wobei die Struktur ein Volumen bildet, das eine geordnete Anordnung von Rohrbündeln mit einem Durchmesser im Bereich zwischen 5 und 50 mm umfasst, wobei die Wände der Rohre Öffnungen umfassen, die angeordnet sind, um das Zirkulieren und das Mischen der Fluide in der Struktur zu fördern, wobei die Öffnungen die Form von Rechtecken aufweisen, deren Seiten zwischen 2 und 45 mm messen und wobei sich jede der Öffnungen über eine Fläche größer 2 mm² erstreckt, wobei jedes Bündel vier Rohre umfasst, die jeweils in vier Richtungen ausgerichtet sind.

2. Packungsstruktur nach Anspruch 1, wobei das Verhältnis zwischen der Fläche der Öffnungen und der Fläche des geschlossenen Abschnitts eines Rohrs im Bereich zwischen 10 % und 90 % liegt.

3. Packungsstruktur nach einem der Ansprüche 1 und 2, wobei der Raum zwischen zwei Öffnungen nicht größer ist als der doppelte Durchmesser des Rohrs.

4. Packungsstruktur nach einem der vorhergehenden Ansprüche, wobei die Rohre ein Gewebe aus mindestens zwei Bändern umfassen, die in Form von zwei sich kreuzenden Spiralen gewickelt sind, die sich entlang einer gleichen Achse erstrecken und einen gleichen Durchmesser aufweisen, wobei die Bänder voneinander beabstandet sind, um die Öffnungen zu bilden.

5. Packungsstruktur nach einem der Ansprüche 1 bis 4, wobei die Bänder mindestens eines der folgenden Materialien umfassen: Kohlenstoff, der durch Abscheidung von Kohlenstoff, Metall, Keramik, einem thermoplastischen Material und einem duroplastischen Material verfestigt ist.

6. Packungsstruktur nach einem der vorhergehenden Ansprüche, wobei die vier Rohre jeweils in den vier Richtungen eines Würfels ausgerichtet sind.

7. Verwendung der Packungsstruktur nach einem der Ansprüche 1 bis 6 in einem Destillationsverfahren.

8. Verwendung der Packungsstruktur nach einem der Ansprüche 1 bis 6 in einem Verfahren zur reaktiven Absorption, wie beispielsweise dem Abscheiden von Kohlendioxid bei der Nachverbrennung und der Behandlung von Erdgas.

9. Verfahren zur Herstellung einer Packungsstruktur einer Kolonne zur Kontaktierung von Fluiden, wobei die folgenden Schritte durchgeführt werden:
a) Herstellen von Rohren mit einem Durchmesser im Bereich zwischen 5 und 50 mm, wobei die Wände der Rohre Öffnungen umfassen, die angeordnet sind, um das Zirkulieren und das Mischen der Fluide in der Struktur zu fördern, wobei die Öffnungen die Form von Rechtecken aufweisen, deren Seiten zwischen 2 und 45 mm messen, und wobei sich jede der Öffnungen über eine Fläche größer 2 mm² erstreckt,
b) Konstruieren einer geordneten Anordnung der Rohre, indem Rohrbündel nebeneinander angeordnet werden, wobei sich die Rohrbündel in vier Richtungen erstrecken,
c) Verbinden der Rohre an ihrem Kontaktabschnitt,
d) Fertigen der geordneten Anordnung derart, dass sie die Packungsstruktur bildet, die an die inneren Abmessungen einer Kolonne angepasst ist.

10. Herstellungsverfahren nach Anspruch 9, wobei in Schritt a), um einen Zylinder Bänder, zum Beispiel Streifen, Drähte oder Bandeisen aus Verbundmaterial in Form von mindestens zwei sich kreuzenden Spiralen gewickelt werden, indem zwischen den Streifen Räume gelassen werden, um die Öffnungen zwischen den Streifen zu bilden.

11. Herstellungsverfahren nach Anspruch 10, wobei die Streifen mindestens eines der folgenden Materialien umfassen: Kohlenstofffasern, die durch Ablagerung von Kohlenstoff, Metall, einem thermoplastischen Material, einem duroplastischen Material verfestigt sind.

## Claims

1. Packing structure for a fluid contact column, said structure forming a volume comprising an ordered assembly of bundles of tubes with a diameter comprised between 5 and 50 mm, the walls of said tubes comprising orifices arranged so as to promote the circulation and mixing of fluids in said structure, said orifices being inscribed in rectangles the sides of which measure between 2 and 45 mm and each of said orifices extending over an area greater than 2 mm², each bundle comprising four tubes respectively orientated in four directions.

2. Packing structure according to claim 1, in which the ratio between the area of the orifices and the area of the solid part of a tube is comprised between 10% and 90%.

3. Packing structure according to one of claims 1 and 2, in which the space between two orifices does not exceed twice the diameter of the tube.

4. Packing structure according to one of the preceding claims, in which said tubes comprise a braiding of at least two strips wound following two crossed helices extending along one and the same axis and one and the same diameter, said strips being a distance apart so as to form said orifices.

5. Packing structure according to one of claims 1 to 4, in which the strips comprise at least one of the following materials: carbon consolidated by deposition of carbon, metal, ceramic, a thermoplastic material and a thermosetting material.

6. Packing structure according to one of the preceding claims, in which said four tubes are respectively orientated in the four directions of a cube.

7. Use of the packing structure according to one of claims 1 to 6, in a distillation process.

8. Use of the packing structure according to one of claims 1 to 6, in a reactive absorption process such as the post-combustion capture of carbon dioxide and the treatment of natural gas.

9. Process for manufacturing a packing structure of a column for contacting fluids, in which the following steps are carried out:
a) manufacturing tubes with a diameter comprised between 5 and 50 mm, the walls of said tubes comprising orifices arranged so as to promote the circulation and mixing of fluids in said structure, said orifices being inscribed in rectangles the sides of which measure between 2 and 45 mm and each of said orifices extending over an area greater than 2 mm²,
b) constructing an ordered assembly of said tubes by juxtaposing bundles of tubes, the bundles of tubes extending in four directions,
c) joining the tubes together at the level of their contact portion,
d) machining the ordered assembly so as to form the packing structure adapted to the internal dimensions of a contact column.

10. Manufacturing method according to claim 9, in which in step a), the strips, for example, strands, wires, ribbons, of composite material are wound around a cylinder according to least two crossed helices leaving spaces between the strips so as to form said orifices between the strips.

11. Manufacturing method according to claim 10, in which the strips comprise at least one of the following materials: carbon fibres consolidated by deposition of carbon, metal, ceramic, a thermoplastic material, a thermosetting material.
